# DEMANDE DE BREVET EUROPEEN

(11) **EP 3 998 420 A1**
(43) Date de publication de la demande: **18.05.2022**
(21) Numéro de dépôt: 20382924.7
(22) Date de dépôt: 23.10.2020
(51) Int. Cl.: F16L 3/13, F16L 3/223

(54) **COLLIER DE PLOMBERIE POUR TUYAUX AVEC UN SYSTÈME MULTIPOSITION**

(30) Priorité: 25.10.2019 ES 201931750 U
(71) Demandeur: Bai S.A.S., 64100 Bayonne (FR)
(72) Inventeur: Lago Fernandez, Eugenio, 64700 Hendaya (FR)
(74) Mandataire: García Limorti, Elena

(57) **Abrégé**

Collier de plomberie pour tuyaux avec système multipositions qui comprend un double collier (1) constitué d'une pièce rectangulaire dans laquelle sont placés aux extrémités des colliers servant à fixer deux tuyaux, dans la partie centrale de laquelle il y a un trou traversant pour le raccordement élément (3) avec le mur et dans la zone intérieure duquel de chaque côté des colliers il y a des encoches qui permettent de fixer la première pièce de serrage (2.1) pour les tuyaux de plomberie et la deuxième pièce de serrage (2.2) pour les tuyaux de plomberie, qui sont interchangeables, et qui sont constitués d'un corps central muni de pinces aux extrémités desquelles sont munies d'encoches de fixation pour pouvoir joindre la double pince (1). De même, la fixation centrale (4) peut être intervertie à l'usage avec la double pince (1).

## Description

### Objet de l'invention

L'invention, comme le titre du présent mémoire l'indique, un collier de plomberie pour tuyaux avec un système de la multiposition est un accessoire pour la fixation de tuyaux pour la plomberie, c'est une innovation qui dans les techniques actuelles offre des avantages inconnus jusqu'à présent.

Le collier de plomberie pour tuyaux avec un système multiposition permet de pallier le manque de techniques actuelles que l'on rencontre dans le secteur de la plomberie, car l'installateur peut installer une seule pièce qui fixe les tuyaux d'écoulement au lieu d'avoir à utiliser plusieurs éléments avec plusieurs trous.

Plus précisément, un collier de plomberie pour tuyaux avec un système multi-positions, résout le manque de techniques actuelles, car l'installateur n'a pas besoin de faire plusieurs trous ou d'utiliser différentes pièces qui ne sont pas développées à cet effet.

### Secteur technique

La présente invention appartient au secteur de la plomberie, et plus précisément à l'installation d'eau sanitaire accompagnée d'un tuyau d'écoulement.

La présente invention concerne un collier pour la fixation d'une ou plusieurs conduites d'eau sanitaire et une pour l'écoulement.

### L'état de l'art

Les éléments de serrage pour les tuyaux de plomberie actuels sont, en général, des colliers simples ou doubles. Ces éléments de serrage ne peuvent pas être assemblés en une seule pièce, ce qui signifie que lors de la réalisation d'installations comprenant des robinets et des siphons, il faut percer deux trous pour pouvoir placer un collier simple et un autre double, et dans de nombreux cas trois trous pour placer trois colliers simples, du fait que des tuyaux de même dimension sont disposés de chaque côté du tuyau de vidange, et il n'est souvent pas possible de placer deux colliers car il n'existe pas sur le marché de collier pour ces deux éléments de dimensions différentes, ou que l'agencement de l'installation ne le permet pas. Ce type de fixation utilise un élément comme ancrage au mur, ce qui entraîne un travail en double ou triple pour chaque installation. Par conséquent, avec les éléments de fixation des tuyaux de plomberie classiques précédents, une fixation correcte n'est possible qu'en réalisant deux ou trois trous, ce qui a un impact: sur l'obligation d'utiliser deux ou trois éléments d'ancrage différents, sur le temps de travail et sur la transmission des vibrations et des bruits que provoque l'utilisation de la perceuse pour chaque trou.

### Explication de l'invention

Par conséquent, la présente invention a pour but de résoudre les problèmes mentionnés ci-dessus, au moyen d'un élément de serrage pour tuyaux de plomberie à multi-positions variable avec quatre éléments, et avec un seul ancrage à la paroi. En conséquence, un élément de serrage pour tuyaux de plomberie est présenté, en particulier un collier avec un système multiposition, avec des pièces mobiles indépendantes, avec un degré de flexibilité et de rigidité pour réaliser un ancrage rapide des tuyaux sans avoir besoin d' éléments externes. 2 Cet élément de serrage pour tuyauterie de plomberie est constitué de quatre éléments indépendants les uns des autres afin d'en faire usage ou non en fonction des besoins de chaque installation

Le double collier (1) présente un support à double serrage avec la possibilité de loger deux tuyaux dans un seul élément qui présente un ancrage flexible et rapide avec un diamètre suffisant pour maintenir le tuyau sans nécessité d'éléments externes .II comporte également des encoches pour l'insertion de la première pièce de serrage (2.1) pour les tuyaux de plomberie et pour la deuxième pièce de serrage (2.2) pour les tuyaux de plomberie, et un trou pour situer l'élément d'ancrage au mur (3).

La première pièce de serrage (2.1) pour les tuyaux de plomberie et la deuxième pièce de serrage (2.2) pour les tuyaux de plomberie, présentent un support avec un serrage pour un tuyau d'écoulement avec un diamètre suffisant pour maintenir le tuyau, avec un ancrage flexible, rapide sous pression sans avoir besoin d'éléments externes. Les diamètres des tuyaux d'écoulement que la première partie de serrage (2.1) pour les tuyaux de plomberie et la deuxième partie de serrage (2.2) pour les tuyaux de plomberie, sont différents, le diamètre de la première partie de serrage (2.1) pour les tuyaux de plomberie étant supérieur à celui de la deuxième pièce de serrage (2.2) pour les tuyaux de plomberie. Les diamètres de serrage sont adaptés aux besoins du marché, et il peut y avoir une gamme de pièces de serrage pour tuyaux de plomberie ; dans ce document deux modèles ont été définis pour deux types de tuyaux différents à titre d'exemple, et il peut y avoir plusieurs pièces avec des mesures différentes. Ils comportent également des encoches dans leur partie latérale pour l'insertion du collier double (1), ainsi que des orifices creux qui servent de guides pour loger la fixation centrale (4). Il comporte un trou pour faire coïncider l'élément de fixation (3) à la paroi avec le trou du double support (1). La fixation centrale (4), a une forme qui s'adapte à la première pièce de serrage (2.1) pour les tuyaux de plomberie et à la deuxième pièce de serrage (2.2) pour les tuyaux de plomberie, afin de permettre l'utilisation séparément avec la première pièce de fixation (2.1) pour les tuyaux de plomberie et la deuxième pièce de fixation (2.2) pour les tuyaux de plomberie, en laissant la même distance du mur qu'en utilisant le collier double (1). A sa base, il présente des saillies qui s'insèrent dans la première pièce de serrage (2.1) pour les tuyaux de plomberie et la deuxième pièce de serrage (2.2) pour les tuyaux de plomberie, dans leur position correcte séparément, empêchant la mobilité ou la rotation desdits éléments ; un orifice est incorporé pour loger l'élément de fixation (3) au mur. De cette manière, l'utilisateur final peut utiliser le collier double (1) et la première pièce de serrage (2.1) pour les tuyaux de plomberie, ou la deuxième pièce de serrage (2.2) pour les tuyaux de plomberie, ou la fixation centrale (4). De cette manière, le besoin de percer plusieurs trous dans les installations de fixation des tuyaux de plomberie des robinets et des écoulements est éliminé, le temps nécessaire à la réalisation de l'installation est réduit et un seul élément d'ancrage mural est utilisé.

### Brève description des dessins

Pour compléter la description qui est faite et dans le but d'aider à mieux comprendre les caractéristiques de l'invention, la présente description est accompagnée, en tant que partie intégrante de celle-ci, de figures sur lesquelles à des fins illustratives et non limitatives, on a représenté ce qui suit:

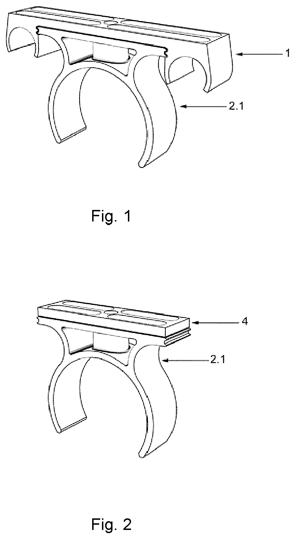

La figure 1 est un assemblage en perspective du double collier (1) combiné avec la première pièce de serrage (2.1) pour tuyaux de plomberie selon la présente invention.
La figure 2 est un assemblage en perspective de la fixation centrale (4), combiné avec la première pièce de serrage (2.1) pour tuyaux de plomberie selon la présente invention.

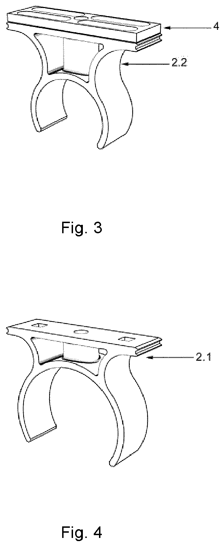

La figure 3 est un assemblage en perspective de la fixation centrale (4), combiné avec la deuxième pièce de serrage (2.2) pour tuyaux de plomberie selon la présente invention.
La figure 4 est une vue en perspective de la première pièce de serrage (2.1) pour tuyaux de plomberie selon la présente invention.

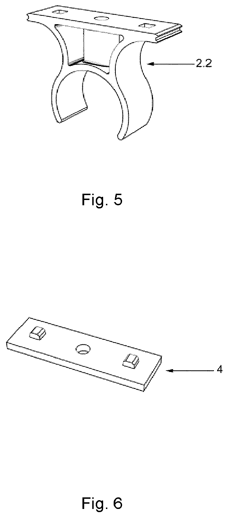

La figure 5 est une vue en perspective de la deuxième pièce de serrage pour tuyaux de plomberie (2.2) selon la présente invention.
La figure 6 est une vue en perspective de la fixation centrale (4) selon la présente invention.

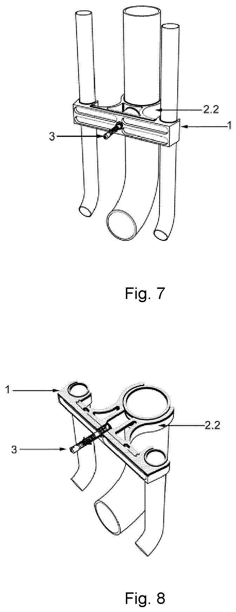

La figure 7 est un ensemble en perspective du double collier (1) combiné avec la deuxième pièce de serrage (2.2) pour tuyaux de plomberie montée sur 3 tuyaux, deux latéraux et un central, et l'élément de jonction (3) selon avec la présente invention.

La figure 8 est une coupe d'un assemblage en perspective du double collier (1) combiné avec la deuxième pièce de serrage (2.2) pour tuyaux de plomberie montés sur trois tuyaux, deux latéraux et un central, et l'élément de jonction (3) selon la présente invention.

### Exposé détaillé d'un mode de réalisation de l'invention.

Au vu des figures, un mode de réalisation préféré mais non limitatif de l'invention proposée est décrit ci-dessous, qui consiste en un collier de plomberie pour tuyaux avec un système multi-positions. Comme on peut le voir sur les figures, l'accessoire de plomberie est de préférence formé par un ensemble d'éléments: le collier double (1) est constitué d'une pièce rectangulaire dans laquelle sont placés des colliers aux extrémités qui servent à maintenir deux tuyaux. Dans la partie centrale du corps, il y a un trou traversant pour l'élément de fixation (3) à la paroi. Dans la zone intérieure de chaque côté des colliers, il y a des encoches qui permettent de fixer la première pièce de serrage (2.1) pour les tuyaux de plomberie et la deuxième pièce de serrage (2.2) pour les tuyaux de plomberie, qui sont interchangeables.

La première pièce de serrage (2.1) pour les tuyaux de plomberie et la deuxième pièce de serrage (2.2) pour les tuyaux de plomberie, sont constituées d'un corps central constitué par un collier. La face opposée au collier est plane et à ses extrémités elle est pourvue d'encoches de fixation pour pouvoir se loger dans le collier double (1). Il y a un trou traversant de l'intérieur du collier et avec une face plane avec un changement de diamètre au moyen d'une partie conique où sera logé l'élément de fixation (3). Dans la partie plate il y a de petites rainures qui lui permettent d'être fixée à la fixation centrale (4) .Le collier central de la première pièce de serrage (2.1) pour tuyaux de plomberie a un diamètre différent de celui de la deuxième pièce de serrage (2.2) pour tuyaux de plomberie, s'adaptant à chaque mesure de chaque tube, ne limitant pas l'existence de seulement deux éléments.

La fixation centrale (4) peut être interchangée lors de l'utilisation avec le double collier (1), ce qui permet d'utiliser la première pièce de serrage (2.1) pour les tuyaux de plomberie et la deuxième pièce de serrage (2.2) pour les tuyaux de plomberie comme s'il s'agissait d'un collier simple. La fixation centrale (4) a une forme rectangulaire et présente en son centre un trou traversant pour l'élément de liaison (3) à la paroi. Sur la face plane qui est montée à côté de la première pièce de serrage (2.1) pour les tuyaux de plomberie et de la deuxième pièce de serrage (2.2) pour les tuyaux de plomberie, elle présente des saillies pour pouvoir être fixée et emboîtée dans la première pièce de serrage (2.1) pour les tuyaux de plomberie et la deuxième pièce de serrage (2.2) pour les tuyaux de plomberie.

## Revendications

1. Collier de plomberie pour tuyaux à système multiposition **caractérisé en ce qu'**il est formé par une série d'éléments multiposition: un collier double (1) et la première pièce de serrage (2.1) pour des tuyaux de plomberie combinés alternativement avec la deuxième pièce de serrage (2.2) pour les tuyaux de plomberie contenant deux ou plusieurs tuyaux aux extrémités, et un tuyau central. De même, la double pince (1) et la fixation centrale (4) sont interchangeables. L'ensemble étant immobilisé par un seul élément de jonction (3) qui fixe l'ensemble à la paroi.

2. Collier de plomberie pour tuyaux à système multi-positions selon la revendication 1, **caractérisé en ce que** la première pièce de serrage (2.1) pour les tuyaux de plomberie et la deuxième pièce de serrage (2.2) pour les tuyaux de plomberie sont interchangeables.
